# EUROPÄISCHE PATENTSCHRIFT

(11) **EP 2 720 973 B1**
(45) Veröffentlichungstag und Bekanntmachung des Hinweises auf die Patenterteilung: **19.02.2020**
(21) Anmeldenummer: 12729836.2
(22) Anmeldetag: 05.06.2012
(51) Int. Cl.: B66F 9/12, B23K 15/00, B23K 26/24

(54) **VERFAHREN ZUR HERSTELLUNG EINER GABELZINKE UND GABELZINKE**
METHOD FOR PRODUCING A FORK ARM, AND FORK ARM
PROCÉDÉ DE FABRICATION D'UN BRAS DE FOURCHE AINSI QUE BRAS DE FOURCHE

(30) Priorität: 15.06.2011 AT 8742011
(43) Veröffentlichungstag der Anmeldung: 23.04.2014
(73) Patentinhaber: EBW LEX GmbH, 3100 St. Pölten (AT)
(72) Erfinder: SZLEZAK, Philipp, 1020 Wien (AT)
(74) Vertreter: Patentanwaltskanzlei Matschnig & Forsthuber OG
(86) Internationale Anmeldenummer: PCT/AT2012/050079
(87) Internationale Veröffentlichungsnummer: WO 2012/171051

(56) Entgegenhaltungen:
- EP-A1- 0 560 524
- DE-C1- 19 515 834
- JP-A- 9 234 523
- JP-A- 2005 138 153
- US-B1- 6 271 499
- BENNETT D C ET AL: "PRACTICAL USES FOR LASER BEAM WELDING", WELDING JOURNAL, AMERICAN WELDING SOCIETY, MIAMI, FL, US, Bd. 69, Nr. 10, 1. Oktober 1990 (1990-10-01), Seiten 52-54, XP000175363, ISSN: 0043-2296

## Beschreibung

Die Erfindung bezieht sich auf Verfahren zur Herstellung einer Gabelzinke für Lastfördergeräte, mit einem in Betriebslage im Wesentlichen horizontalen Gabelblatt und einem über einen Gabelknick daran anschließenden, im Wesentlichen vertikalen Gabelrücken, der mit Anschlusselementen für das Fördergerät versehen ist, wobei die Gabelzinke aus mehreren, miteinander verbundenen Teilen besteht, und zumindest ein Anzahl der Teile miteinander verschweißt wird.

Ebenso bezieht sich die Erfindung auf eine nach diesem Verfahren hergestellte Gabelzinke.

Eine bekannte Zinke ist der DD 256 050 A3 zu entnehmen und ist dort in dem einzigen Ausführungsbeispiel als aus drei, am Rand durch eine Kehlnaht miteinander verschweißten Stahllamellen bestehend gezeigt und beschrieben, wobei erwähnt ist, dass die einzelnen Lamellen miteinander verklebt sein können, ohne dass jedoch Hinweise gegeben werden, auf welche Weise ein Verkleben erfolgen könnte. Die äußeren Lamellen können dabei aus einem Qualitätsstahl und die innere Lamelle aus gewöhnlichem Baustahl bestehen. Durch die beschriebene Ausbildung soll der Aufwand bei der Herstellung verringert werden, da die einzelnen Lamellen ohne Schmieden durch Biegen herstellbar seien.

Dieser bekannte Lösungsansatz könnte zwar tatsächlich die Herstellung vereinfachen, jedoch kann die Festigkeit der Gabelzinke durch die am Rand durch Kehlnähte miteinander verschweißten Stahllamellen nicht erreicht werden, insbesondere die Durchbiegung der Gabelzinke unter Last ist durch das seitliche Verschweißen mit Kehlnähten wesentlich höher als bei herkömmlichen Gabelzinken aus Vergütungsstahl. Weiters wurde die Lamellendicke so gewählt, dass das Biegen des Gabelknicks durch örtliches Erwärmen des Biegebereichs erfolgen muss, und die Energiezufuhr schon beim Biegen erheblich ist. Eine zweite zusätzliche erhöhte Energiezufuhr erfolgt durch das gewählte Schweißverfahren mit Kehlnähten am Rand der Stahllamellen, wobei eine dritte weitere Energiezufuhr durch das Spannungsfreiglühen der Schweißnähte erforderlich ist.

Zur Vereinfachung der Herstellung ist es aus der DE 195 15 834 C1 auch bekannt geworden, das Gabelblatt und/oder den Gabelrücken bzw. auch die ganze Zinke aus nebeneinander liegenden Scheiben herzustellen, die an einigen Stellen verschweißt sind. Man kann sich hierdurch zwar Schmiedearbeiten zumindest zum Teil ersparen, doch ist das Verschweißen an bestimmten Bereichen eine aufwändige und kritische Arbeit, welche insgesamt der Festigkeit der gesamten Zinke abträglich ist.

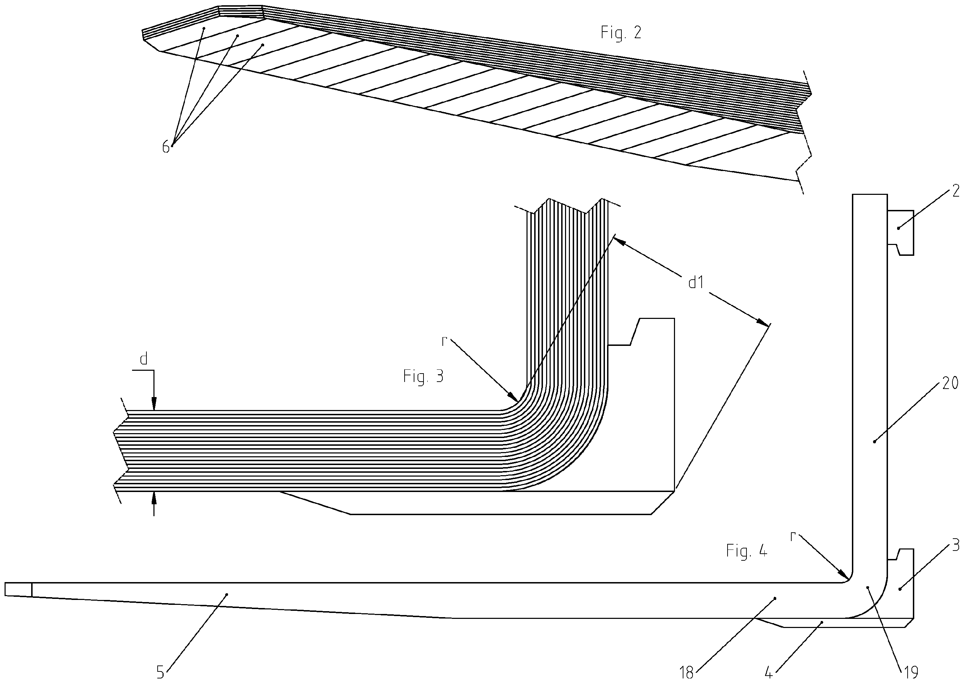

Das Dokument EP 0 560 524 A1 zeigt gleichfalls eine aus Lamellen bestehende Gabelzinke, wobei sämtliche Verbindungsmöglichkeiten von Lamellen einer Gabelzinke offen gelassen werden, allerdings insbesondere auf das Verkleben eingegangen wird und in allgemeiner Form auch auf das Verschweißen, wobei als einziges Beispiel in Fig. 4 Schweißwülste 52 längs der Seitenkanten einer Gabelzinke gezeigt und beschrieben sind, die sich über den gesamten Verlauf der zu verschweißenden Flächen erstrecken. Es geht jedoch hier um die Außenflächen der Lamellen, wobei deren Verschweißen insgesamt dazu führt, dass sich die Schweißnähte wie zwei aufgestellte Flachstähle verhalten, was zur Folge hat, dass sich bei Belastung diese aufgestellten Flachstähle in Lastrichtung über Gebühr verbiegen, wobei die einzelnen Lamellen diese Bewegung mitmachen, indem sie sich axial verschieben. Die statische Wirkung einer derartig aufgebauten Gabelzinke entspricht einem gleich dimensionierten Formrohr und es können nicht die gewünschten Festigkeitswerte insgesamt erzielt werden.

Dokument EP 0560 524 A1 betrifft eine Gabelzinke umfassend übereinander angeordnete Lamellen. Das Dokument EP 0560524 A1 offenbart weiter die Merkmale des einleitenden Teils des Anspruchs 1.

Dokument DE 195 15 834 C1 betrifft ebenso eine Gabelzinke, die durch Verbindung einer Vielzahl an Elementen hergestellt ist.

Es ist eine Aufgabe der Erfindung, ein Verfahren zur Herstellung einer hochfesten, möglichst leichten und ökonomisch herstellbaren Zinke zu schaffen, bei welcher die genannten, dem Stand der Technik anhaftenden Nachteile zumindest weitgehend beseitigt sind. Insbesondere soll die Herstellung auch sehr rasch vor sich gehen, wobei andererseits die Energiezufuhr nur sehr gering ist.

Dieses Ziel wird mit einem Verfahren nach Anspruch 1 erreicht.

Somit ist es erfindungsgemäß wesentlich, dass eine flächige Verbindung zwischen den einzelnen Lamellen entsteht, wobei Schweißtiefen von 30 % der Gabelzinkenbreite (je 15 % an den Seitenflächen) bzw. mindestens 15 mm Schweißtiefe zweckmäßig sind, um eine tatsächlich flächige Verschweißung zu erhalten, welche die vorhin genannten Probleme der Festigkeit überwindet. In vielen Fällen empfiehlt es sich aber auch, über die gesamte Breite der Zinke zu schweißen, so dass die Lamellen oder einzelnen Teile vollflächig verschweißt sind.

Weitere zweckmäßige Ausbildungen der Erfindung sind in den abhängigen Unteransprüchen gekennzeichnet.

Die Erfindung bietet den Vorteil, dass trotz nur geringer Energiezufuhr hochwertige Gabelzinken herstellbar sind, wobei die oben genannten Nachteile des Standes der Technik beseitigt sind.

Die kristallinen Strukturen der gesamten Gabelzinke und der einzelnen Stahllamellen bleiben auch nach dem Schweißen weitgehend unbeschädigt erhalten. Die Schweißnähte sind aufgrund der hohen Leistungsdichte des Elektronenstrahlschweißen sehr schmal, vorzugsweise unter 1 mm) jedoch andererseits tief (bis zu 100 mm möglich), sodass eine flächige, zwischen den Lamellen ohne zusätzlichen Materialeintrag hochfeste Verbindung entsteht. Die Festigkeit der Nähte ist so hoch, dass eine Schweißtiefe von 30 % der Gabelzinkenbreite genügt, um eine höchstfeste Gabelzinke herzustellen, die dem Festigkeitspotenzial der höchstfesten Bleche der einzelne Lamellen mit einer Zugfestigkeit von beispielsweise 1500 N/mm² entspricht. Die Schweißtiefe kann aber je nach Bedarf verringert oder vergrößert werden. Die beispielsweise genannten 30 % teilen sich dann zu je 15 % an den Seitenflächen der Blechlamellen auf. Die Bleche können unter Berücksichtigung eines seitens des Herstellers der Bleche geforderten Mindestbiegeradius des Blechherstellers kalt gebogen werden. Die Erfindung eignet sich durch CNC Steuerung zur Herstellung in großen Stückzahlen, wobei die Herstellkosten durch die geringe Energieeinbringung erheblich gesenkt werden. Die hohe Schweißgeschwindigkeit (20 m/min) ermöglicht eine Herstellgeschwindigkeit im Minutentakt, weil mehrere Lamellen gleichzeitig geschweißt werden können.

Im Folgenden werden beispielhafte Ausführungsformen einer Gabelzinke näher erläutert, die in der Zeichnung veranschaulicht sind. Dabei stellt keine der Figuren eine Ausführungsform der Erfindung dar. Die Figuren zeigen jeweils nur einzelne Aspekte der Erfindung. Die Schutzumfang der Erfindung wird allein durch die beigefügten Ansprüche definiert. Es zeigen
Fig. 1 in einer perspektivischen Explosionsdarstellung eine Gabelzinke bzw. deren Einzelteile,
Fig. 2 in einer perspektivischen Teilansicht von unten stufenweise verkürzte Lamellen,
Fig. 3 in vergrößerter Seitenansicht den Bereich des Gabelknicks,
Fig. 4 in einer Seitenansicht eine fertig zusammengesetzte Gabelzinke,
Fig. 5 die Gabelzinke nach Fig. 4 in perspektivischer Ansicht von unten und vorne,
Fig. 6 eine andere, der Fig. 4 entsprechende Darstellung der Gabelzinke,
Fig. 7 in einem Detail aus Fig. 6 begradigte Blechlammelen der Zinke,
Fig. 8 einen Querschnitt nach dem Schnitt A-A der Fig. 10 mit den einzelnen Blechlamellen,
Fig. 9 vergrößert ein Detail aus Fig. 8,
Fig. 10 eine andere, der Fig. 4 entsprechende Darstellung der Gabelzinke,
Fig. 11 vergrößert den Bereich des Gabelknicks der Zinke nach Fig. 10,
Fig. 12 eine weitere Ausführungsform einer Gabelzinke in schematischer Seitenansicht,
Fig. 13 in einer Explosionsdarstellung die einzelnen Teile der Gabelzinke der Fig. 12
Fig. 14 in einer weiteren Explosionsdarstellung eine mit Blechelementen verkleidete erfingungsgemäße Gabelzinke,
Fig. 15 einen Querschnitt durch den Kern der Gabelzinke nach Fig. 14 und die Verkleidungselemente und
Fig. 16 in einer Ansicht wie Fig. 15 den verschweißten Endzustand.

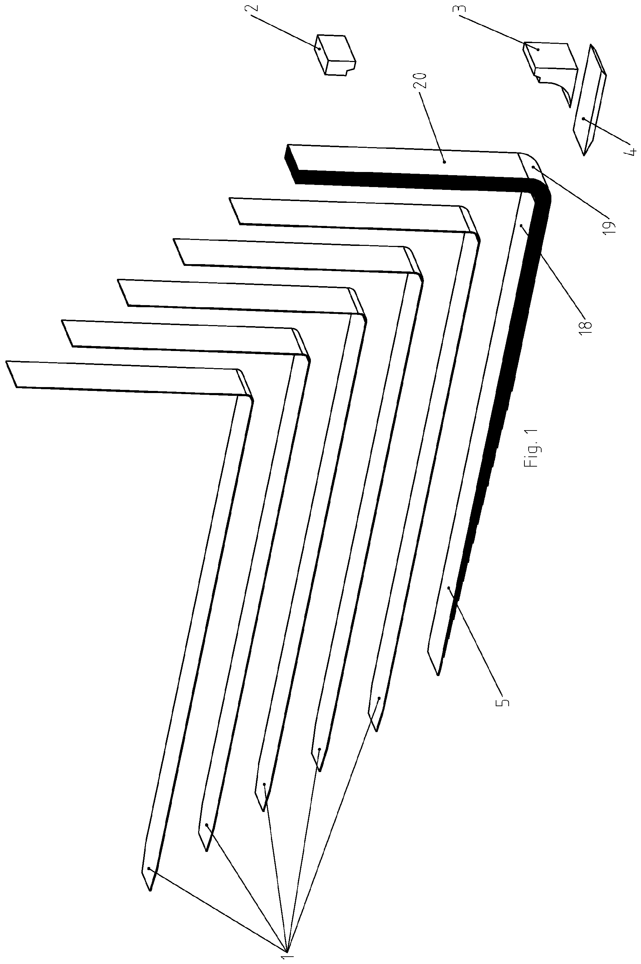

Fig. 1 zeigt die perspektivische Explosionsdarstellung einer ersten Ausführungsform einer Gabelzinke 18 in Lamellenbauweise, wobei jede einzelne Lamelle 1 aus beispielsweise Docol 1500 M (mit einer Zugfestigkeit von 1500 N/mm²) in der Blechdicke Verwendung findet, welche ein Kaltbiegen problemlos ermöglicht (beispielsweise ca. 2 mm). Das in der Gebrauchslage im Wesentlichen waagrechte Gabelblatt 5 der Zinke 18 geht über einen Gabelknick 19 in einen vertikalen Gabelrücken 20 über. Wie weiter unten noch näher erläutert, werden die einzelnen Lamellen 1 vom Rand her durch Elektronenstrahlschweißen verschweißt, wobei die Schweißnaht zwischen aneinandergrenzenden Flächen der Teile beidseitig zumindest 3 mm tief geführt wird.

Da die Festigkeit der Nähte sehr hoch ist, genügt eine Schweißtiefe von 30 % der Gabelzinkenbreite, um eine hochstfeste Gabelzinke herzustellen. Die Schweißtiefe kann aber je nach Bedarf verringert oder vergrößert werden, wobei auch ein vollständiges Durchschweißen über die Zinkenbreite möglich ist.

Die genannten 30 % teilen sich zu je 15 % an den Seitenflächen der Blechlamellen auf. Bei den verwendeten, als Beispiel genannten Blechen beträgt der seitens des Blechherstellers vorgeschriebene Mindestbiegeradius r 14 mm.

Weiters ist in Fig. 1 ein oberes Anschlusselement 2 zu sehen, das vollflächig an das Lamellenpaket, mittels Elektronenstrahlschweißverfahren aufgeschweißt wird. Ein unteres Anschlusselement 3 ist an den Außenradius des Gabelknickpaketes angepasst, und wird ebenfalls mittels besagten Schweißverfahren, flächig aufgeschweißt. Ein Verschleißblech 4 aus beispielsweise HARDOX 500, wird ebenso mittels des genannten Schweißverfahrens flächig aufgeschweißt. Die Anschlusselemente können beispielsweise aus der Stahlsorte S235JR bestehen.

Die einzelnen Blechlamellen sind zweckmäßigerweise nach unten hin zunehmend verkürzt. In Fig. 2 sind die Unterflächen 6 der verkürzten Lamellen ersichtlich, wobei diese Verkürzung von oben nach unten zur Folge hat, dass die Gabelzinke nach vorne verjüngt ist. Eine solche verjüngte Zinkenform ist meist erwünscht, da sie dadurch das Untergreifen einer Last erleichtert. Äußere Decklamellen 1 bestehen aus einem anderen Metall, z.B. einem Buntmetall und werden ebenso mitverschweißt.

Fig. 3 zeigt, dass der Innenradius r des Gabelknicks kleiner ist, als der nicht eingezeichnete äußere Radius. Weiters ist die Gabelknickdiagonale d1 fast doppelt so dick, wie die Gabelzinkendicke d. Alle anzuschweißenden Bauteile liegen schlüssig auf einander, sodass beim Verschweißen kein zusätzliches Schweißgut eingebracht werden muss. Eine Dimensionierung, die annähernd der beschriebenen entspricht, wirkt sich besonders günstig auf die Festigkeit des im Bereich des Gabelknicks aus.

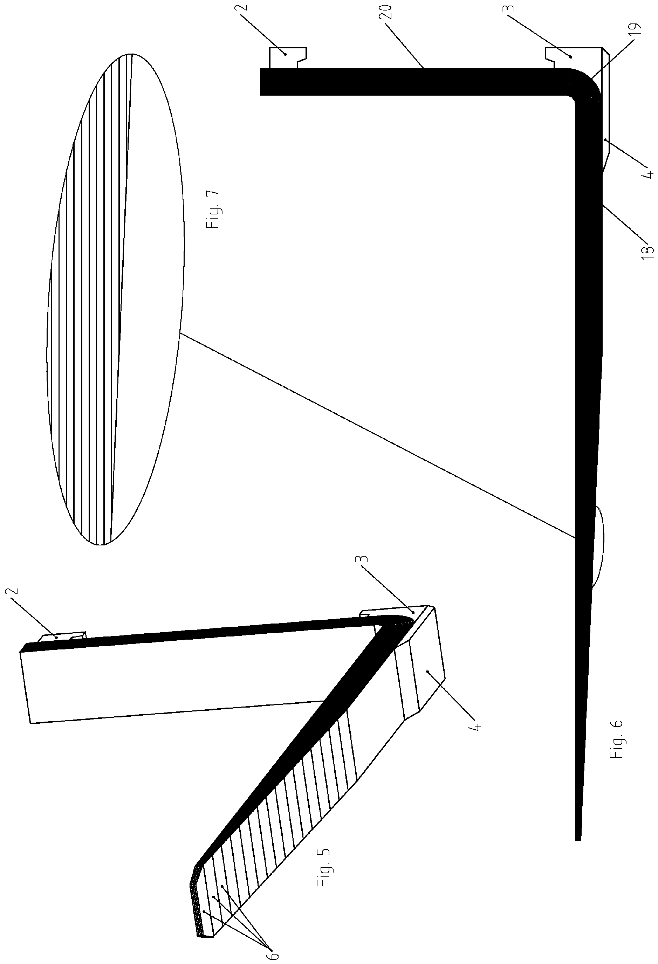

Fig. 4 zeigt die einzelnen Bauteile im zu der Gabelzinke 18 zusammengefügten Zustand von der Seite gesehen und Fig. 5 zeigt die fertige Gabelzinke 18 perspektivisch von vorne, unten und links.

Auch Fig. 6 zeigt die fertige Gabelzinke 18 mit den an ihr angeschweißten Anschlusselemente 2, 3 und dem Verschleißblech 4. Hier sei angemerkt, dass das untere Anschlusselement 3 auch mit dem Verschleißblech 4 einstückig, den Gabelknick 19 von außen umfassend ausgebildet sein kann.

Fig. 7 zeigt begradigten Blechlamellen in größerer Darstellung aus Fig. 6. Diese Begradigung kann beispielsweise spanabhebend erfolgen.

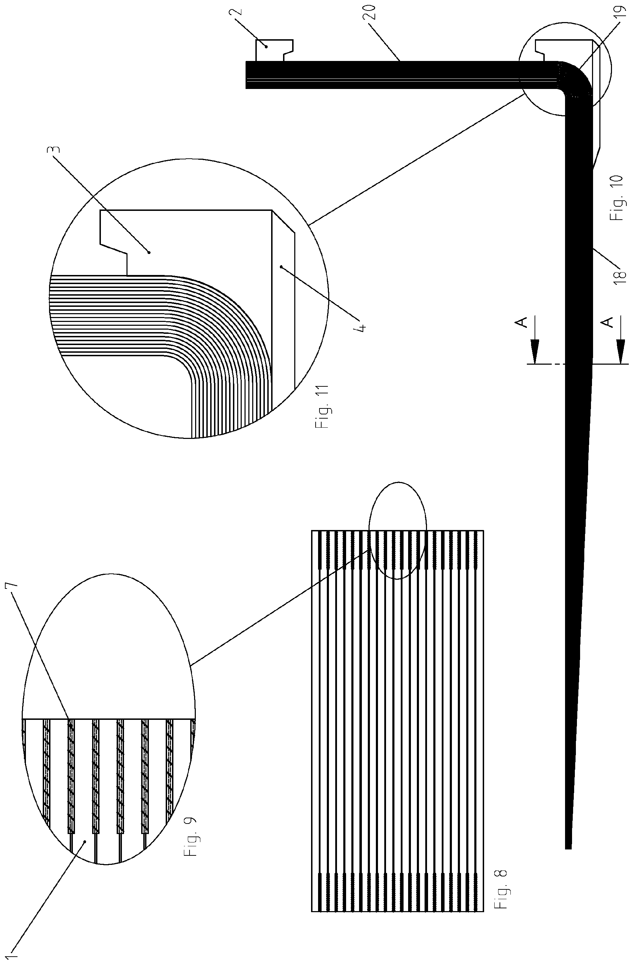

Aus dem Querschnitt des Gabelzinkenblatt nach Fig. 8 und aus der vergrößerten Darstellung der Fig. 9 eines Ausschnittes der Fig. 8 erkennt man das Verschweißen der einzelnen Blechlamellen 1 vom Rande her. Insbesondere sieht man, wie schmal die Schweißnaht 7 ist, beispielsweise bloß ca. 0,5 mm und wie tief der Elektronenstrahlschweißvorgang erfolgt, nämlich bei diesem Ausführungsbeispiel ca. 15 mm. Die Schweißtiefe muss erfindungsgemäß mindestens 15 mm beidseitig betragen, kann aber auch weitaus tiefer sein und auch die gesamte Blechbreite erfassen.

Fig. 10 zeigt nochmals eine fertige Gabelzinke 18, wobei aus dem in Fig. 11 vergrößert dargestellten Detail zu sehen ist, dass das Verschleißblech 4 sowie das untere Anschlusselement 3 ebenfalls flächig aufgeschweißt sind.

Die beschrieben Ausführung bietet auch den Vorteil, dass die Gabelzinke durch die Lamellenbauweise nicht abrupt brechen kann, weil durch den unterbrochenen Querschnitt ein möglicher Riss nicht durch die gesamte Querschnittfläche weiterverlaufen kann.

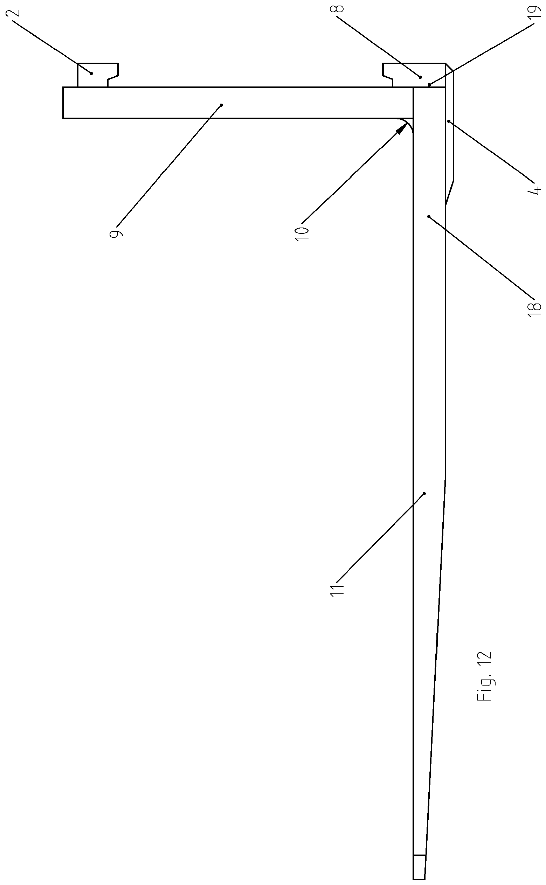

Fig. 12 zeigt eine Variante der Gabelzinke einer weiteren Ausführungsform der Gabelzinke in schematischer Seitenansicht, bei der ein Vergütungsstahl in Profilform Anwendung findet. Die einzelnen Bauteile, nämlich eine Gabelrücken 9, ein Gabelblatt 11, ein oberes Anschlusselement 2, ein unteres Anschlusselement 8, ein Verschleißblech 4 und ein Kehlstück 10 werden auch hier durch Elektronenstrahlschweißen miteinander verschweißt, wobei die Schweißnaht zwischen aneinandergrenzenden Flächen der Teile beidseitig zumindest 3 mm tief geführt wird. Mit 19 ist auch hier der Gabelknick bezeichnet.

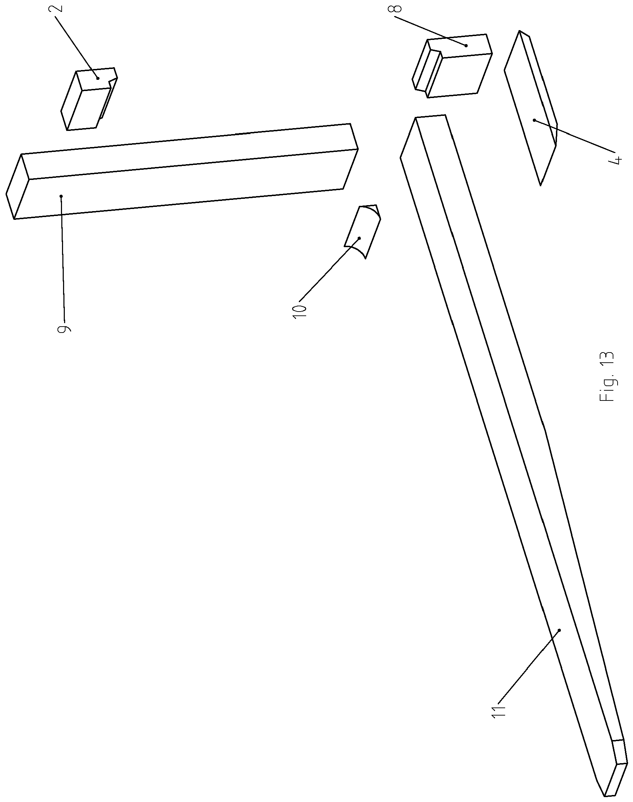

Fig. 13 zeigt die Explosionsdarstellung der einzelnen genannten Teile der Gabelzinke aus Fig. 12 vor dem Verschweißen..

Nur durch die Anwendung des Elektronenstrahlschweißverfahrens besteht durch die geringe Energie bzw. Wärmeeinbringung die Möglichkeit einer weitgehenden Beibehaltung der Gefügestrukturen des bereits vergüteten Vergütungsstahls (z.B. 36NiCrMo16 Werkstoff Nr. 1.6773 mit einer Zugfestigkeit von 1050 N/mm²). Ein Glühen und ein anschließendes Biegen und Schmieden ist hier bei der gezeigten Bauweise der Einzelteile nicht erforderlich. Auch ein Spannungsfreiglühen kann aufgrund der minimalen Wärmeeinbringung entfallen. Die zusammengefügte Kombination der Bauteile wie in Fig. 12 zu sehen entspricht optimalen den statischen Anforderungen. Der gesamte Schweißvorgang dauert pro Gabelzinke weniger als 10 Sekunden.

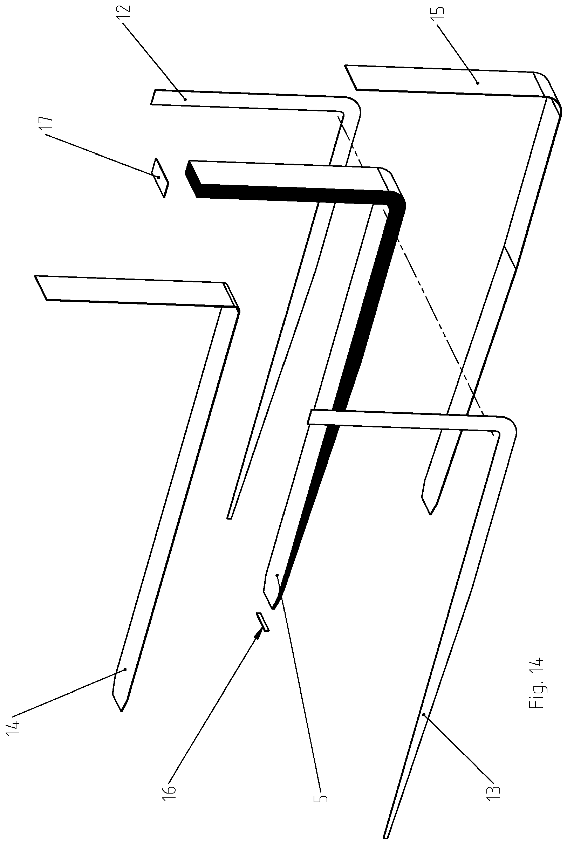

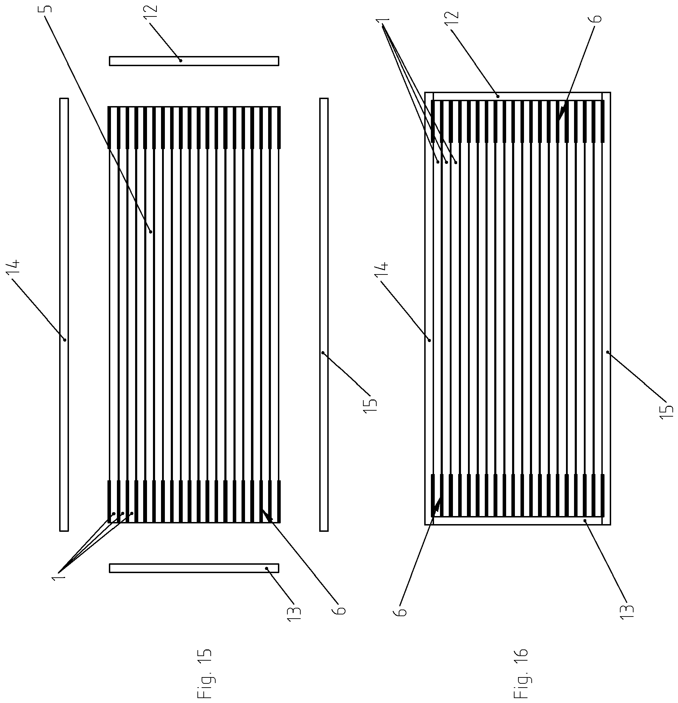

Fig. 14 zeigt die Explosionsdarstellung einer weiteren Ausführungsform einer Gabelzinke 18, bei welcher ein einstückiger Grundkörper, der zuvor z.B. entsprechend der Fig. 1 hergestellt wurde, mit Decklamellen 12, 13, 14, 15, 16, 17, bestehend aus Buntmetall oder aus nichtrostenden Edelstahl verkleidet und gemäß der Erfindung, mit dem Grundkörper aus Stahl durch die Anwendung des Elektronenstrahlverfahren verschweißt wird. Fig. 15 zeigt dabei im Querschnitt den Grundkörper 18'und die Verkleidungselemente 12 bis 17 in noch nicht angefügten Zustand und Fig. 16 im Querschnitt den Grundkörper und die Verkleidungselemente 12 bis 17 aus Buntmetall bzw. Edelstahl in durch die Anwendung des Elektronenstrahlverfahren zusammengefügten Zustand. Die Anwendung von Decklamellen aus bestimmten anderen Metallen berücksichtigt die Anwendung der Gabelzinke 18 in Umgebungen mit besonderen Anforderungen, wie z.B. der Lebensmittelindustrie. Für den Lebensmittelbereich ist es oft erforderlich, nichtrostenden Edelstahl für Gabelzinken zu verwenden. Durch das Verschweißen von Edelstahl als Decklamelle mit den normalen Blechlamellen, besteht die Möglichkeit erhebliche Kosten einzusparen.

Erwähnt sei auch zum Beispiel, dass bei explosionsgeschützten Gabelzinken (Vermeidung von Funkenbildung) z.B. Bronze, ganz allgemein ein Buntmetall, mit Stahl verschweißt werden kann.

## Patentansprüche

1. Verfahren zur Herstellung einer Gabelzinke (18) für Lastfördergeräte, mit einem in Betriebslage im Wesentlichen horizontalen Gabelblatt (5) und einem über einen Gabelknick (19) daran anschließenden, im Wesentlichen vertikalen Gabelrücken (9), der mit Anschlusselementen (2, 3, 4, 8) für das Fördergerät versehen ist, wobei die Gabelzinke aus mehreren, miteinander verbundenen Teilen (1; 2, 3, 4, 8, 9, 11; 12 bis 17) besteht, und zumindest eine Anzahl der Teile miteinander verschweißt wird,
**dadurch gekennzeichnet, dass**
Teile (1; 2, 3, 4, 8, 9, 11; 12 bis 17) der Gabelzinke (18) durch Elektronenstrahlschweißen miteinander verschweißt werden, wobei die Schweißnaht flächig zwischen aneinandergrenzenden Flächen der Teile beidseitig zumindest 15 mm bzw. beidseitig mindestens 15% der Gabelzinkenbreite tief geführt wird, wobei ein zuvor einstückig hergestellter Grundkörper der Gabelzinke (18) aus Stahl an seinen Außenflächen durch allseitiges Verschweißen mit Decklamellen (12, 13, 14, 15, 16, 17) verkleidet wird, wobei jeder Seite eine eigene Decklamelle (12, 13, 14, 15, 16, 17) zugeordnet wird, wobei die Decklamellen (12, 13, 14, 15, 16, 17) aus Edelstahl und/oder Buntmetall bestehen.

2. Verfahren nach Anspruch 1, zur Herstellung einer aus mehreren miteinander verbundenen übereinander liegenden Lamellen (1) bestehenden Gabelzinke (18), **dadurch gekennzeichnet, dass** alle Lamellen (1) miteinander verschweißt werden.

3. Verfahren nach Anspruch 2, **dadurch gekennzeichnet, dass** einzelne Lamellen (1) der Gabelzinke (18) im Bereich des horizontalen Gabelblatts (5) eine von oben nach unten abnehmende Länge aufweisen, sodass die Zinke nach vorne zu verjüngt ist.

4. Verfahren nach Anspruch 2 oder 3, **dadurch gekennzeichnet, dass** ein unteres Verschleißblech (4) vorgesehen ist, welche die Zinke (18) zusammen mit einem unteren Anschlussstück (8) im Bereich des Gabelknicks nach unten und hinten abdeckt.

5. Verfahren nach einem der Ansprüche 2 bis 4, **dadurch gekennzeichnet, dass** zumindest eine Decklamelle (12, 13, 14, 15, 16, 17) aus Buntmetall mit einer angrenzenden Lamelle (1) aus Stahl verschweißt wird.

6. Verfahren nach Anspruch 4, **dadurch gekennzeichnet, dass** ein oberes und eine unteres Anschlusselement (2, 3) mit dem vertikalen Gabelrücken (9) flächig verschweißt wird, wobei das untere Anschlusselement (3) mit dem Verschleißblech (4) einstückig, den Gabelknick (19) von außen umfassend ausgebildet ist.

7. Gabelzinke hergestellt mit einem Verfahren nach einem der Ansprüche 1 bis 6.

## Claims

1. Method for producing a fork arm (18) for load conveyors, having a fork blade (5) which is substantially horizontal in the operating position, and a substantially vertical fork back (9) adjoining thereto via a fork bend (19), which fork back is provided with connecting elements (2, 3, 4, 8) for the conveyor, wherein the fork arm consists of a plurality of parts (1; 2, 3, 4, 8, 9, 11; 12 to 17) connected to one another, and at least a number of the parts is welded to one another,
**characterized in that**
parts (1; 2, 3, 4, 8, 9, 11; 12 to 17) of the fork arm (18) are welded to one another by electron beam welding, wherein the weld is guided in a flat manner between adjacent surfaces of the parts on both sides at least 15 mm or on both sides at least 15% of the fork arm width deep, wherein a base body of the fork arm (18), previously produced in one piece, made of steel is lined on its outer surfaces by all-round welding with covering laminae (12, 13, 14, 15, 16, 17), wherein a separate covering lamina (12, 13, 14, 15, 16, 17) is assigned to each side, wherein the covering laminae (12, 13, 14, 15, 16, 17) consist of stainless steel and/or non-ferrous metal.

2. Method according to Claim 1, for producing a fork arm (18) consisting of a plurality of superimposed laminae (1) connected to one another, **characterized in that** all the laminae (1) are welded to one another.

3. Method according to Claim 2, **characterized in that** individual laminae (1) of the fork arm (18) have a length, which decreases from the top to the bottom, in the region of the horizontal fork blade (5), such that the arm tapers forwards.

4. Method according to Claim 2 or 3, **characterized in that** a lower wear sheet (4) is provided, which covers the arm (18) together with a lower connecting piece (8) in the region of the fork bend downwards and behind.

5. Method according to one of Claims 2 to 4, **characterized in that** at least one covering lamina (12, 13, 14, 15, 16, 17) made of non-ferrous metal is welded with an adjacent lamina (1) made of steel.

6. Method according to Claim 4, **characterized in that** an upper and a lower connecting element (2, 3) is welded with the vertical fork back (9) in a flat manner, wherein the lowering connecting element (3) is formed in one piece with the wear sheet (4), in a manner comprising the fork bend (19) from the outside.

7. Fork arm produced with a method according to one of Claims 1 to 6.

## Revendications

1. Procédé de fabrication d'un bras de fourche (18) pour des appareils de manutention de charges, comportant une lame de fourche (5) sensiblement horizontale en position de fonctionnement, et un dos de fourche (9), sensiblement vertical, qui se raccorde par un coude de fourche (19) à ladite lame de fourche et qui est muni d'éléments de raccordement (2, 3, 4, 8) pour l'appareil de manutention, le bras de fourche comportant plusieurs pièces (1 ; 2, 3, 4, 8, 9, 11 ; 12 à 17) reliées entre elles, et au moins un nombre desdites pièces étant soudées entre elles,
**caractérisé par le fait que**
des pièces (1 ; 2, 3, 4, 8, 9, 11 ; 12 à 17) du bras de fourche (18) sont soudées entre elles par soudage par faisceau d'électrons, le cordon de soudure à plat entre des surfaces adjacentes des pièces pénétrant avec une profondeur de chaque côté d'au moins 15 mm ou de chaque côté d'au moins 15% de la largeur du bras de fourche, un corps de base, fabriqué au préalable d'un seul tenant, du bras de fourche (18) en acier étant revêtu sur ses surfaces externes par soudage sur tous les côtés par des lamelles de recouvrement (12, 13, 14, 15, 16, 17), une lamelle de recouvrement distincte (12, 13, 14, 15, 16, 17) étant associée à chaque côté, les lamelles de recouvrement (12, 13, 14, 15, 16, 17) étant constituées d'acier inoxydable et/ou de métal non-ferreux.

2. Procédé selon la revendication 1, pour la fabrication d'un bras de fourche (18) constitué de plusieurs lamelles (1) superposées, reliées entre elles, **caractérisé par le fait que** toutes les lamelles (1) sont soudées entre elles.

3. Procédé selon la revendication 2, **caractérisé par le fait que**, dans la région de la lame de fourche horizontale (5), des lamelles individuelles (1) du bras de fourche (18) présentent une longueur qui diminue de haut en bas, de telle sorte que le bras de fourche s'effile vers l'avant.

4. Procédé selon l'une des revendications 2 ou 3, **caractérisé par le fait qu'**une plaque d'usure inférieure (4) est prévue, laquelle, conjointement avec une pièce de jonction inférieure (8), recouvre le bras de fourche (18) dans la région du coude de fourche vers le bas et l'arrière.

5. Procédé selon l'une des revendications 2 à 4, **caractérisé par le fait qu'**au moins une lamelle de recouvrement (12, 13, 14, 15, 16, 17) en métal non-ferreux est soudée à une lamelle adjacente (1) en acier.

6. Procédé selon la revendication 4, **caractérisé par le fait qu'**un élément de jonction supérieur et un élément de jonction inférieur (2, 3) sont soudés à plat au dos de fourche vertical (9), l'élément de jonction inférieur (3) étant formé d'un seul tenant avec la plaque d'usure (4), enfermant le coude de fourche (19) par l'extérieur.

7. Bras de fourche fabriqué par un procédé selon l'une des revendications 1 à 6.
